# EUROPÄISCHE PATENTSCHRIFT

(11) **EP 1 008 495 B1**
(45) Veröffentlichungstag und Bekanntmachung des Hinweises auf die Patenterteilung: **03.12.2003**
(21) Anmeldenummer: 99121537.7
(22) Anmeldetag: 29.10.1999
(51) Int. Cl.: B60R 21/20

(54) **Kraftfahrzeugsitz mit einem in der Rückenlehne angeordneten Seiten-Airbag**
Vehicle seat having a back provided with lateral airbag
Siège de véhicule à dossier équipé d'un coussin de sécurité latéral

(30) Priorität: 10.12.1998 DE 19856972
(43) Veröffentlichungstag der Anmeldung: 14.06.2000
(73) Patentinhaber: smart gmbh, 71032 Böblingen (DE)
(72) Erfinder: Ryl, Axel, 30173 Hannover (DE); Scheuren, Norbert, 71120 Grafenau (DE); Schophaus, Ulf, 44791 Bochum (DE)
(74) Vertreter: Weiss, Klaus

(56) Entgegenhaltungen:
- DE-C- 19 729 472

## Beschreibung

Die vorliegende Erfindung betrifft einen Kraftfahrzeugsitz gemäß dem Oberbegriff des Anspruchs 1.

Ein derartiger Sitz ist aus DE 197 29 472 C1 bekannt. Die das Airbag-Gehäuse einfassende Blende besteht, auf Einbaulage bezogen, aus einem hinteren, oberen, unteren und vorderen Schenkel, ist also umlaufend geschlossen. Bis auf den vorderen Schenkel sind alle Schenkel der Blende zweiwangig mit einer Außenund einer Innenwange ausgeführt. Auf den Innenseiten der Innenwangen sind jeweils Rastnasen vorgesehen, die beim Aufschieben der Blende hinter den Blechkanten des Ausschnitts einrasten. Der vordere, dem Brückenblech benachbarte Schenkel ist als Leiste ausgeführt, die bei in Einbaulage befindlicher Blende nach innen und zur Seite abragt. Auf dem nach innen ragenden Teil sind drei Rastnasen angeordnet, die in die Ebene einer aus mehreren Abschnitten gebildeten, inneren Klemmleiste hineinragen. Der inneren Klemmleiste liegt eine kürzere, äußere Klemmleiste gegenüber. Beim Aufschieben der Blende auf den Ausschnitt rasten die Rastnasen in entsprechende Öffnungen des Brückenblechs ein. Dabei schiebt sich gleichzeitig die äußere Klemmleiste auf die Außenseite des Brückenblechs auf , so daß dieses zwischen der inneren und äußeren Klemmleiste eingeklemmt ist. Die Blende ist auf diese Weise allseitig am Ausschnitt bzw. auf einer Seite am Brückenblech festgelegt.

Aus DE 196 42 938 A1 und DE 196 32 586 A1 sind Blenden für Seiten-Airbags bekannt. Allerdings dienen diese Blenden nicht der Führung des Airbag-Gehäuses, da sie an diesem selbst befestigt werden bzw. einstückig mit diesem ausgebildet sind.

Aufgabe der vorliegenden Erfindung ist es, bei einem gattungsgemäßen Kraftfahrzeugsitz die Blende zur Kaschierung des Airbag-Austritts unter Beibehaltung ihrer Vorteile weiterzuentwickeln.

Gelöst wird diese Aufgabe mittels eines Kraftfahrzeugsitzes mit den Merkmalen des Anspruchs 1.

Bei der erfindungsgemäßen Blende ist im Vergleich mit der als Stand der Technik diskutierten Blende der vordere, recht kompliziert aufgebaute Schenkel zum Wegfall gekommen. Dadurch reduzieren sich die Kosten für die Spritzgußwerkzeuge sowie die Materialkosten. Des weiteren liegt nun auch kein Blendenteil mehr im Bereich des Entfaltungsweges des Airbags. Damit wird mit Sicherheit vermieden, daß der entfaltende Airbag auf die Blende aufschlagen kann und eventuell davon abgesplitterte Teile unter Gefährdung von Insassen im Fahrgastraum umherfliegen.

Trotz des Wegfalls des vorderen Schenkels und des damit verbundenen einfacheren Aufbaus der Blende bleibt diese vollständig funktionsfähig. Die nach unten bzw. oben eingezogenen Enden der Innenwangen des oberen bzw. unteren Schenkels der Blende bilden Anlageflächen für das Airbag-Gehäuse, die zu dessen seitlicher Führung völlig ausreichend sind. Diese Führungsflächen sind auch starr genug, da sie auf ihrer Außenseite durch die angeformten Rastnasen verstärkt werden. Diese Rastnasen dienen dem Verrasten der Blende mit dem Brückenblech, so daß die Blende allseitig sicher im Ausschnitt festgelegt ist.

Die Erfindung wird nachstehend anhand eines Ausführungsbeispiels näher erläutert. In der dazugehörigen Zeichnung zeigt:
- Fig. 1: eine perspektivische Darstellung einer Rükkenlehne ohne Polsterteile mit eingebautem Seiten-Airbag,
- Fig. 2: eine vergrößerte Darstellung des Ausschnitts A gemäß Fig. 1,
- Fig. 3: einen Schnitt III-III gemäß Fig. 2 mit eingezeichnetem Seitenpolster,
- Fig. 4: eine perspektivische Einzeldarstellung der Blende in Einbaulage von innen, schräg vorn und unten gesehen,
- Fig. 5: eine perspektivische Darstellung gemäß Fig. 4 von schräg hinten und oben gesehen,
- Fig. 6: eine perspektivische Darstellung des Brükkenblechs mit eingerasteter Blende etwa in Richtung des Pfeils B gemäß Fig. 3 gesehen, und
- Fig. 7: eine Darstellung gemäß Fig. 1 bei nicht montiertem Seiten-Airbag.

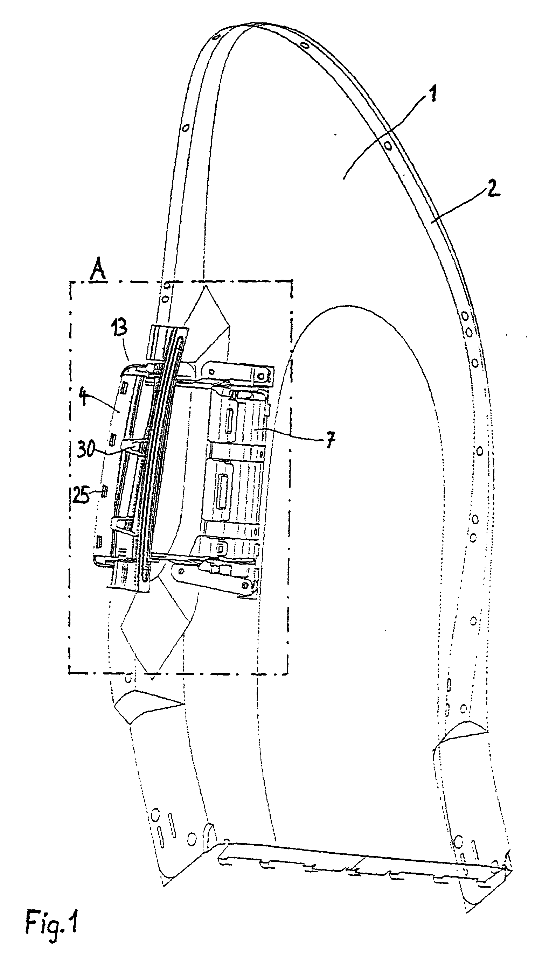

Die in Fig. 1 dargestellte Rückenlehne besitzt eine Rückenschale 1 aus tiefgezogenem Blech, in deren Randbereich zur Versteifung umlaufende Blechprofile 2 eingeschweißt sind. Die Blechprofile 2 bilden zusammen mit der Rückenschale 1 die tragende Struktur der Rückenlehne und werden nachfolgend als Rükkenlehnen-Rahmen bezeichnet. Die weiterhin dargestellten Teile des Rückenlehnen-Rahmens haben für die Erfindung keine Bedeutung und werden daher nicht weiter erläutert.

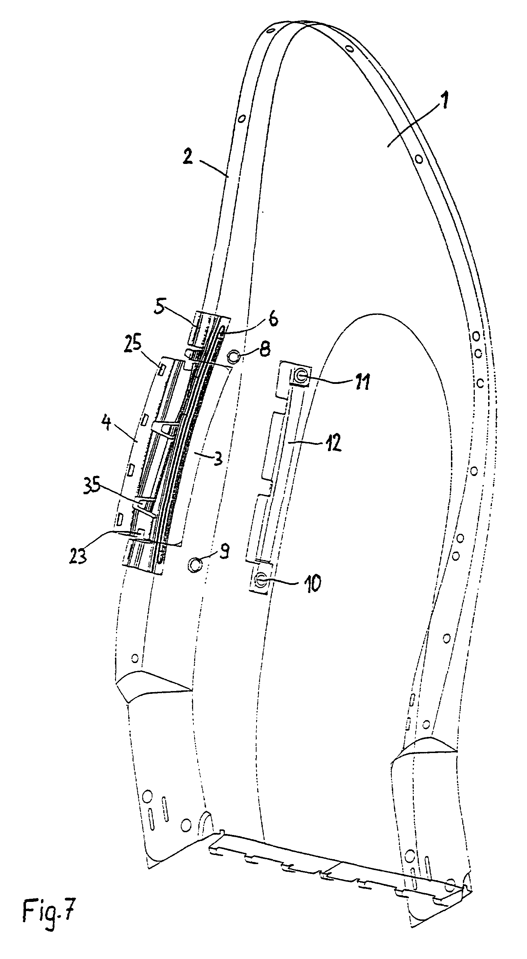

Wie am besten aus Fig. 7 hervorgeht, weist der Rückenlehnen-Rahmen in seinem Seitenbereich einen Ausschnitt 3 auf, der nach vorn durch ein Brückenblech 4 geschlossen ist, welches auf den Rückenlehnen-Rahmen mittels Lochschweißungen 5 aufgeschweißt ist. Das Brückenblech 4 hat eine größere Blechstärke als der Rückenlehnen-Rahmen und weist zur Versteifung Profilierungen und Sicken 6 auf. Es verstärkt den Rückenlehnen-Rahmen im Randbereich des Ausschnitts 3.

Der Ausschnitt 3 bildet eine Austrittsöffnung für ein Seiten-Airbag-Gehäuse 7, dessen Aufbau dem Stand der Technik entspricht und daher keiner weiteren Erläuterung bedarf. Zur Befestigung des Airbag-Gehäuses 7 sind am Rückenlehnen-Rahmen vier Befestigungspunkte vorgesehen, die durch Stanzmuttern 8 bis 11 gebildet sind. Zwei dieser Stanzmuttern 8, 9 sind im Blechprofil 2 angeordnet. Die anderen beiden Stanzmuttern 10, 11 gehören zu einem Halteblech 12, das an die Rückenschale 1 angeschweißt ist (Fig. 7).

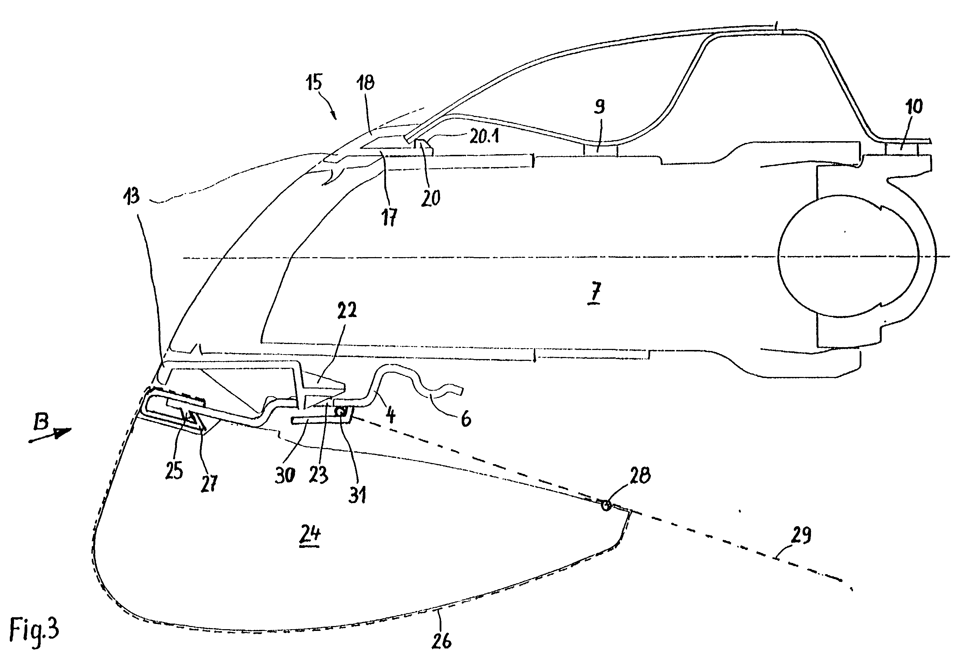

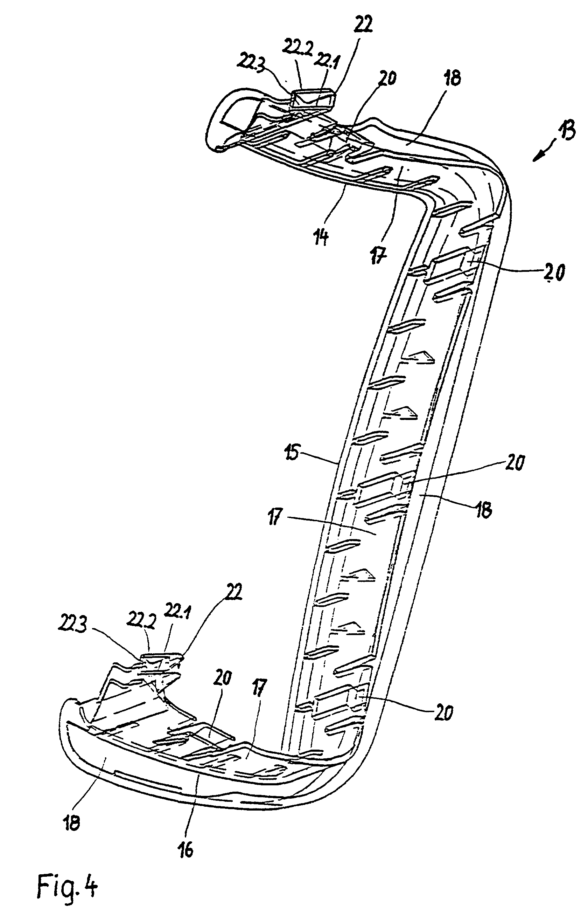

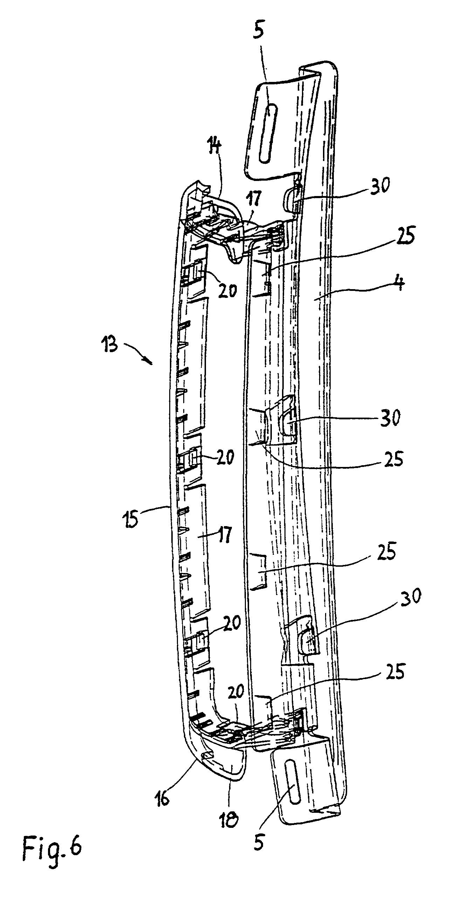

Auf den Rand des Ausschnitts 3 ist eine Blende 13 aus Kunststoff aufgeschoben, deren Konstruktion aus den Fig. 3 bis 6 hervorgeht und nachfolgend beschrieben wird.

Der, bezogen auf Einbaulage, obere Schenkel 14, hintere Schenkel 15 und untere Schenkel 16 der Blende 13 ist durchgehend zweiwangig mit einer Innenwange 17 und einer Außenwange 18 ausgebildet, wobei die Innenwangen 17 und die Außenwangen 18 V-förmig voneinander abstehen. Im Zwickel sind die Außenwangen 18 und die Innenwangen 17 des hinteren Schenkels 15 durch dreieckförmige Stege 19 gegeneinander ausgesteift. Auf den Innenseiten der Innenwangen 17 sind Rastnasen 20 angeordnet, und zwar drei am hinteren Schenkel 15 und je eine am oberen und unteren Schenkel 14 bzw. 16.

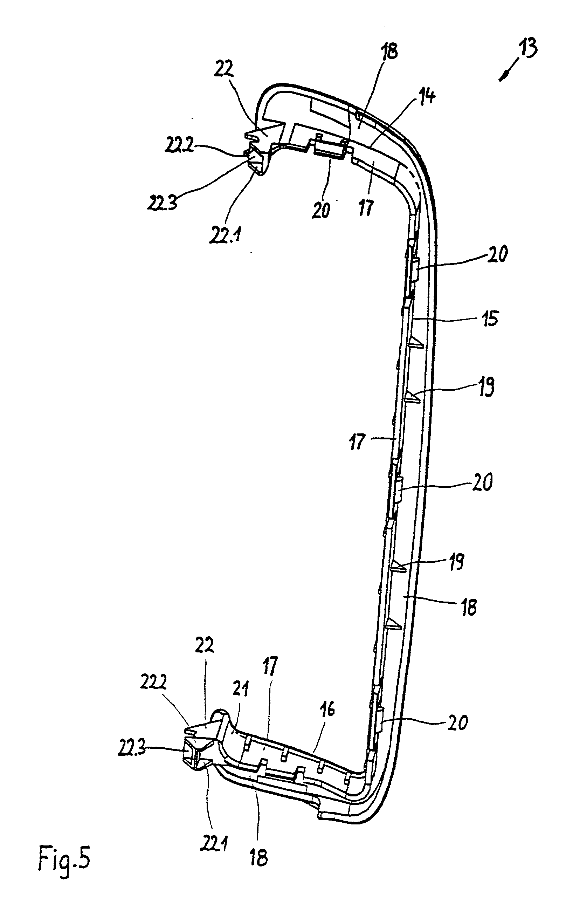

Die Enden der oberen und unteren Innenwange 17 sind aufeinander zu gebogen, wodurch Führungsflächen 21 für die zugeordnete Seitenwand des Airbag-Gehäuses 7 gebildet sind. Aus Fig. 5 geht die Ausbildung dieser Führungsfläche 21 am unteren Schenkel 16 der Blende 13 hervor. Diese ist in identischer Weise auch am oberen Schenkel 14 der Blende 13 vorhanden, was aus der Zeichnung nicht ersichtlich ist.

Die beiden Führungsflächen 21 sind jeweils durch eine sich außen anschließende Rastnase 22 verstärkt. Diese Rastnasen 22 besitzen zwei parallele Wände 22.1 und 22.2, die durch einen Steg 22.3 gegeneinander ausgesteift sind, d.h. die Rastnasen 22 sind relativ stark ausgebildet.

Die Montage der Blende 13 und des Airbag-Gehäuses 7 geschieht wie folgt: Die Blende 13 wird von außen auf die Umrandung des Ausschnitts 3 aufgeschoben und dann eingedrückt. Dabei laufen die obere, hintere und untere Blechkante des Ausschnitts 3 zunächst auf die vordere Schräge 20.1 (Fig. 3) der Rastnasen 20 auf, wodurch die Innenwangen 17 auf ihrer gesamten Länge nach innen einfedern und dann nach dem Überlaufen der Rastnasen 20 hinter diesen einrasten.

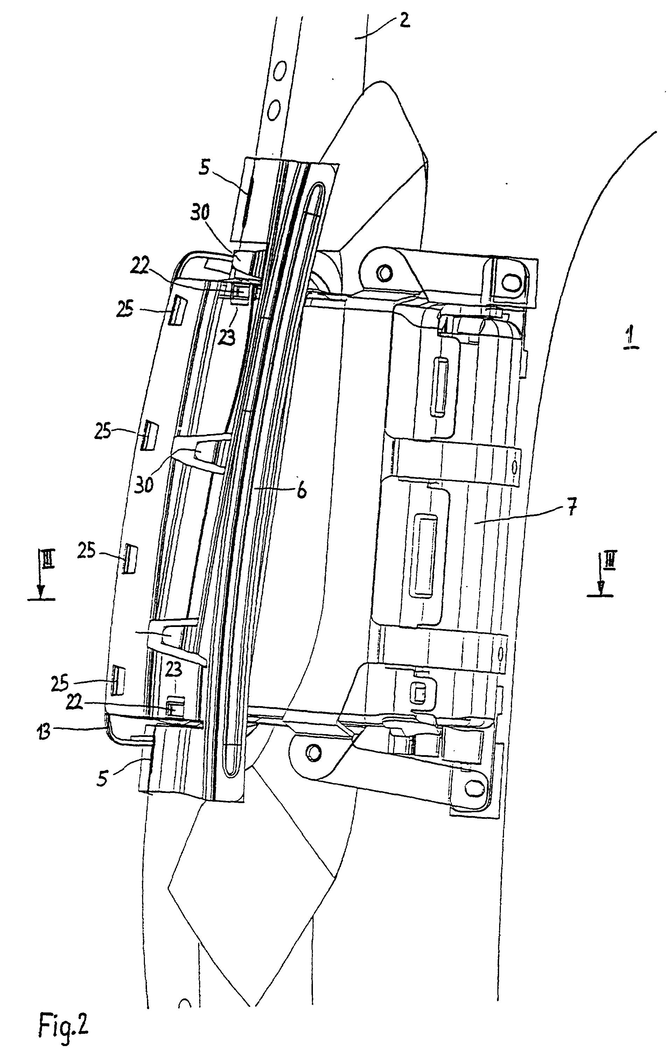

Zeitgleich mit dem oben beschriebenen Vorgang laufen die Rastnasen 22 am Ende des oberen Schenkels 14 bzw. unteren Schenkels 16 der Blende 13 auf die Innenseite des Brückenbleches 4 auf und rasten dann in korrespondierende, im Brückenblech 4 vorgesehene Öffnungen 23 (Fig. 2, Fig. 3) ein.

Am Ende des obenstehend beschriebenen Aufdrückvorgangs sitzt die Blende 13 sehr fest auf der Umrandung des Ausschnitts 3 auf. Toleranzen des Ausschnitts 3 werden dadurch ausgeglichen, daß die Rastnasen 20 eine radiale Erstreckung haben, so daß die obere, untere und hintere Blechkante des Ausschnitts 3 auch bei Maßabweichungen noch sicher eingeklemmt sind.

Nachdem die Blende 13 montiert ist, kann das Airbag-Gehäuse 7 eingebaut werden. Dieses wird dazu von innen durch die Blendenöffnung hindurch nach außen geschoben. Die Innenseiten der Innenwangen 17 sowie deren durch die Einziehungen am Ende der Schenkel 14 bzw. 16 gebildeten Führungsflächen 21 dienen dabei als Führung. Gleichzeitig schützt die Blende 13 das Airbag-Gehäuse 7 vor Beschädigungen, da die scharfen Blechkanten des Ausschnitts 3 abgedeckt sind. Anschließend wird das Airbag-Gehäuse 7 an die Stanzmuttern 8 bis 11 angeschraubt. Damit ist die Montage des Airbag-Gehäuses 7 abgeschlossen.

Die Blende 13 umgibt das Airbag-Gehäuse 7 mit ihren Schenkeln 14, 15 und 16 mit nur kleinem Spiel, so daß sich ein gleichmäßiger, geringer Randspalt ergibt. Des weiteren liegen die Außenwangen 18 der Blende 13 dicht an der Umrandung des Ausschnitts 3 und die Innenwangen 17 am Airbag-Gehäuse 7 an. Dadurch ergibt sich ein optisch ansprechender Anschluß zum Airbag-Gehäuse 7 bzw. zum Rückenlehnen-Rahmen.

Wie aus Fig. 3 hervorgeht, ragt das Airbag-Gehäuse 7 im montierten Zustand ein Stück aus der Rückenlehnen-Kontur seitlich heraus. Nach vorn ist es durch ein Seitenpolster 24 sowie durch das nach außen abragende Brückenblech 4 abgedeckt. Das Brückenblech 4 ist mit Befestigungshaken 25 für einen in Fig. 3 mit einer gestrichelten Linie angedeuteten Bezugsstoff 26 des Seitenpolsters 24 versehen. Zum Einhängen in diese Befestigungshaken 25 ist der Bezugsstoff 26 an seinem äußeren Rand mit Hakenprofilen 27 ausgestattet. Auf der Innenseite ist das Seitenpolster 24 mit seinem Bezugsstoff 26 an der mit einem Kreis 28 angedeuteten Stelle in eine Bespannung 29 der Rückenlehne, die z.B. eine Netzstruktur sein kann, eingeclipst. Das Seitenpolster 24 ist somit sicher befestigt, kann aber ohne weiteres durch Lösen der Verhakung bzw. Verclipsung wieder leicht abgenommen werden. Die Bespannung 29 ihrerseits ist an aus dem Brückenblech 4 herausgedrückten Zungen 30 eingehängt und dazu an ihrem Rand mit einem Einhängedraht 31 versehen (Fig. 3).

## Patentansprüche

1. Kraftfahrzeugsitz mit einem in der Rückenlehne angeordneten Seiten-Airbag, wobei der Rückenlehnen-Rahmen in seinem Seitenbereich einen Ausschnitt (3) zum Durchtritt des Seiten-Airbags aufweist, der nach vorn durch ein den Rückenlehnen-Rahmen verstärkendes Brückenblech (4) geschlossen ist, und die Ränder des Ausschnitts (3) durch eine Blende (13) aus Kunststoff eingefaßt sind, deren Schenkel (14-16) zweiwangig mit Innen- (17) und Außenwange (18) ausgeführt sind, wobei die Außenwangen (18) die Ausschnittsränder übergreifen und die Innenwangen (17) in Einschubrichtung des Airbag-Gehäuses (7) nach innen ragen, **dadurch gekennzeichnet, daß** die Blende (13) eine C-Form besitzt, und in Einbaulage zum Brückenblech (4) hin offen ist, wobei die Enden der oberen und unteren Innenwangen (17) der Blende (13) aufeinander eingebogen sind und so Führungsflächen (21) für das Airbag-Gehäuse (7) bilden, und wobei die Enden der Innenwangen (17) durch jeweils eine Rastnase (22) zum Verrasten der Blende (13) mit dem Brückenblech (4) verstärkt sind.

## Claims

1. A motor vehicle seat with a lateral air bag positioned in the seat back, the lateral area of the seat back frame having a cut-out (3) through which the lateral air bag passes and which is closed at the front by a bridging plate (4) which reinforces the seat back frame, and the edges of the cut-out (3) being enclosed by a shield (13) made ofplastic which has legs (14-16) which are double-faced with inner (17) and outer faces (18), the outer faces (18) overlapping the edges of the cut-out (3) and the inner faces (17) projecting inwards in the direction of insertion of the air bag housing (7),
**characterised in that**
the shield (13) is C-shaped and, when fitted, is open to the bridging plate (4), the ends of the upper and lower inner faces (17) of the shield (13) being bent towards each other thereby forming guides surfaces (21) for the air bag housing (7), and each of the ends of the inner faces (17) being reinforced by means of a snap-in lug (22) to lock the shield (13) to the bridging plate (4).

## Revendications

1. Siège de véhicule à dossier équipé d'un coussin de sécurité latéral, moyennant quoi, le cadre du dossier présente dans sa zone latérale une section (8) pour faire passer le coussin de sécurité latéral, qui est fermé vers l'avant par une tôle de pont (4) renforçant le cadre du dossier, et les bords de la section (8) sont entourés par un masque (13) en matière plastique, dont les épaulements à paroi double sont réalisés avec une face intérieure (17) et une face extérieure (18), moyennant quoi, les faces extérieures (18) empiètent sur les bords de la section et les faces intérieures (17) font saillie vers l'intérieur dans la direction d'insertion du logement du coussin de sécurité (7), **caractérisé en ce que** le masque (13) possède une forme en C, et est ouvert dans la position d'installation par rapport à la tôle de pont (4), moyennant quoi, les extrémités des faces intérieures supérieures et inférieures (17) du masque (13) sont engagés l'une sur l'autre et forment ainsi les surfaces de guidage (21) pour le logement du coussin de sécurité (7), et moyennant quoi, les extrémités des faces intérieures (17) sont renforcées respectivement par un nez à crans (22) pour enclencher le masque (13) avec une tôle de pont (4).
